# EUROPÄISCHE PATENTSCHRIFT

(11) **EP 1 137 359 B1**
(45) Veröffentlichungstag und Bekanntmachung des Hinweises auf die Patenterteilung: **24.09.2003**
(21) Anmeldenummer: 99964487.5
(22) Anmeldetag: 16.11.1999
(51) Int. Cl.: A47L 1/00

(54) **ARMATURENTEILE MIT GRANITDEKOROBERFLÄCHE**
PARTS OF AN ARMATURE ELEMENTS WITH A GRANITE DECOR SURFACE
ELEMENTS D'ARMATURE AVEC SURFACE A MOTIF GRANITE

(30) Priorität: 18.11.1998 DE 19853109
(43) Veröffentlichungstag der Anmeldung: 04.10.2001
(73) Patentinhaber: BLANCO GmbH + Co KG, 75038 Oberderdingen (DE)
(72) Erfinder: ZAMZOW, Manfred, D-75031 Eppingen (DE); HARKE, Stefan, D-74889 Sinsheim-Rohrbach (DE); BODIRSKY, Birgit, D-69242 Mühlhausen (DE)
(74) Vertreter: Wössner, Gottfried, Dr. Dipl.-Chem.
(86) Internationale Anmeldenummer: EP9908804
(87) Internationale Veröffentlichungsnummer: WO00028872

(56) Entgegenhaltungen:
- EP-A- 0 150 547
- EP-A- 0 361 101
- DE-B- 2 822 908

## Beschreibung

Die Erfindung betrifft Armaturenteile mit einer Granitdekoroberfläche, wie sie insbesondere im Küchenbereich als farbliches Pendant zum Dekor von Küchenspüle und/oder Arbeitsplatte verwendet werden.

Küchenspülen und/oder Küchenarbeitsplatten mit Granitdekoroberfläche sind im Zuge der Entwicklung geeigneter, mit anorganischen Füllstoffen gefüllter Kunststoffmaterialien immer beliebter geworden, und um hier zu einem einheitlichen Aussehen auch der Armaturen zu kommen, wurden bereits Armaturenteile mit einer Email- oder Lackschicht überzogen, die ebenfalls ein Granitdekor simulieren sollen.

Nachteilig an diesen Armaturenteilen ist zum einen, daß aufgrund der anderen Materialien sich das Granitdekor der Arbeitsplatte bzw. der Küchenspüle bei den Armaturenteilen nicht identisch abbilden läßt und bei näherem Hinsehen und insbesondere beim Anfassen dieser Teile (Haptik) doch deutliche Unterschiede erkennbar bleiben. Ein wesentliches Charakteristikum der Granitdekoroberflächen von Küchenspülen und Arbeitsplatten, die zumindest in der Oberfläche aus mit grobkörnigen Füllstoffen gefüllten Kunststoffen hergestellt sind, ist deren bewußt herbeigeführte Oberflächenrauhigkeit, die das synthetische Produkt dem Naturvorbild noch weiter annähert.

Gerade diese Charakteristika lassen sich mit emaillierten oder mit lacküberzogenen Metallteilen nicht ausreichend genau simulieren.

Armaturenteile sind andererseits Teile, bei denen nicht nur eine Sichtseite, sondern mindestens zwei oder noch mehr Sichtseiten existieren. Bei der Herstellung der oben besprochenen Küchenspülen mit Granitdekoroberfläche wird die besondere Haptik dadurch erzielt, daß die bei der Herstellung verwendeten Gießmassen, die die groben Füllstoffpartikel beinhalten, so eingestellt werden, daß es zu einem Absetzen der Füllstoffe und damit zu einem Anreichern an einer Oberfläche, die später die sogenannte Sichtseite bildet, kommt. Eine typische Arbeitsvorschrift findet sich in dem europäischen Patent EP 0 361 101.

Der Granitdekoreffekt gemäß der EP 0 361 101 wird aber gerade dadurch erzielt, daß Füllstoffe mit solchen Partikelgrößen verwendet werden, die beim Aushärten der Gießmassen nicht in der Schwebe gehalten werden können und zur Oberfläche absinken.

Aus der DE 44 13 903 ist zwar bekannt, daß sich mit anorganischen Füllstoffen gefüllte Kunststoffmaterialien auf der Basis von Polymethylmethacrylat zur Herstellung von Teilen von Spenderarmaturen eignen. Die dort vorgeschlagenen Füllstoffe weisen jedoch relativ kleine Partikelgrößen auf, mit denen der Granitdekoreffekt nicht erzielbar ist.

In der EP 0 150 547 A1 wird u. a. die Herstellung von Spenderarmaturen beschrieben, bei denen Teile aus onyx- oder marmorartigen Kunstharzen gebildet sind und eine glänzende bzw. polierfähige Oberfläche aufweisen. Als Füllstoffe werden dort ausgehärtete Harzpartikel empfohlen, deren mittlere PartikelgröBe unterhalb von 180 µm liegt. Ein Granitdekoreffekt, der sich nicht nur im Aussehen, sondern auch in der Haptik zeigt, läßt sich mit dieser Technologie nicht erzielen.

Aufgabe der vorliegenden Erfindung ist es, Armaturenteile vorzuschlagen, welche in Aussehen und Haptik den aus aushärtbaren Gießmassen hergestellten Granitdekorküchenspülen und/oder Küchenarbeitsplatten entsprechen.

Diese Aufgabe wird bei den eingangs beschriebenen Armaturenteilen erfindungsgemäß dadurch gelöst, daß diese unter Verwendung von aushärtbaren Kunststoffgießmassen hergestellt werden, welche einen mineralischen, partikelförmigen Füllstoff mit Partikelgrößen im Bereich von 0,1 bis 2 mm in einer Menge von 50 bis 85 m% sowie ein rheologisch wirksames Additiv umfassen, welches aus modifizierten Polyharnstoffen ausgewählt ist, so daß ein Absinken der Füllstoffe während des Gieß- und Aushärtevorgangs im wesentlichen vermieden wird, die Viskosität der das Additiv enthaltenden Gießmassen jedoch 6,3 Pa · s oder weniger beträgt.

Typischerweise liegen die Viskositäten der Gießmassen ohne Additiv im Bereich von 5 bis 6 Pa · s. Diese Viskositäten ergeben sich vor allem aufgrund der für die Armaturenteile mit Granitdekor notwendigen hohen Füllstoffanteile.

Zwar werden in der EP 0 361 101 für die Herstellung der Granitdekorspülen ebenfalls Thixotropiermittel als Zusatz zu der Gießmasse empfohlen, um zu vermeiden, daß sich die groben Füllstoffpartikel vorzeitig absetzen, jedoch gelang es mit den dort eingesetzten Thixotropiermitteln nicht, diesen Effekt ganz auszuschalten (er wird im Gegenteil während des Aushärtevorganges gerade genutzt, um den Granitdekoreffekt zu erzielen), und darüber hinaus lassen die dort vorgeschlagenen Thixotropiermittel die Viskosität der Gießmasse auf ca. 7 Pa · s oder mehr ansteigen, so daß eine Verarbeitung solcher Gießmassen, unabhängig von den immer noch gegebenen Absetzproblemen für die groben Füllstoffpartikel, zu - oft viel feingliedrigeren - Armaturenteile im Gießverfahren unmöglich ist. Außerdem weisen die gemäß der EP 0 361 101 hergestellten Formkörper an den von der Sichtseite verschiedenen Oberflächen Glanzstellen auf, die bei Armaturenteilen nicht akzeptabel sind. Bei den in der EP 0 361 101 vornehmlich angesprochenen Küchenspülen sind die Glanzstellen in der Regel kein Problem, da die diese Glanzstellen aufweisenden Oberflächen im eingebauten Zustand der Spüle nicht sichtbar sind.

Erstaunlicherweise lassen sich bei der obigen spezifischen Auswahl rheologisch wirksamer Additive Armaturenteile mit einer Granitdekoroberfläche herstellen, die mehr als eine Sichtseite haben und die in ihrer Haptik den Granitdekoroberflächen gemäß der EP 0 361 101 entsprechen. D. h., daß mit den erfindungsgemäß ausgewählten Additiven die Glanzstellen an Oberflächen des Formkörpers weitgehend, wenn nicht vollständig vermieden werden können.

Die bei den Kunststoffgießmassen einsetzbaren Matrixbestandteile werden vor allem ausgewählt aus Polyester, Polyacrylat, Polymethacrylat oder Epoxidharz. Die Auswahl der Matrixbestandteile für die Kunststoffgießmassen ist demzufolge nicht kritisch. Von den Verarbeitungseigenschaften und den Gebrauchseigenschaften her werden jedoch insbesondere Polyester sowie Polyacrylate bzw. Polymethacrylate bevorzugt.

Grundrezepturen für mit anorganischen Füllstoffen gefüllte, aushärtbare Gießmassen sind in der Literatur in großer Vielzahl beschrieben. Beispielhaft hierfür sind DE 23 16 638 A1 und DE 24 49 656 A1.

Bei den Füllstoffen werden erfindungsgemäß insbesondere Füllstoffpartikel im Größenbereich 0,1 bis 1 mm berücksichtigt, weiter bevorzugt von 0,1 bis 0,4 mm. Der Füllstoffgrad wird bevorzugt im Bereich von 70 bis 85 m% angesiedelt. Der Schwerpunkt dieses Bereiches liegt deutlich oberhalb dessen, was in der EP 0 361 101 empfohlen und als wirtschaftlich machbar angesehen wird.

Vorzugsweise weisen die erfindungsgemäßen Armaturenteile bei ihrer Granitdekoroberfläche kleine Vertiefungen in Form von Mikromulden auf, die sich vorzugsweise durch ein Schrumpfen des Matrixbestandteiles beim Aushärten der Gießmasse zwischen den einzelnen Füllstoffpartikeln an der Oberfläche ausbilden können.

Die erfindungsgemäß ausgewählten, geeigneten rheologischen Additive in Form der thixotropierenden modifizierte Polyharnstoffe (Harnstoffurethane) sind beispielsweise die in der DE 28 22 908 C2 beschriebenen.

Die ebenfalls häufig verwendeten Kieselgele als Thixotropiermittel, ebenso wie viele andere dieser Additive, führen, sobald dem Absetzeffekt wirksam begegnende Mengen in die Gießmasse eingearbeitet werden, zu deutlichen Viskositätserhöhungen (beispielsweise 7 bis 13 Pa · s) und im Ergebnis zu unbefriedigenden Armaturenteilen mit Glanzstellen, die die typische, erwünschte Oberflächenrauhigkeit von Grahitmaterialien vermissen lassen und auch optisch stören, oder sogar mit Löchern, die durch Lufteinschlüsse hervorgerufen werden.

Insbesondere eignen sich die erfindungsgemäßen Armaturenteile als Teile einer Wasserzapfarmatur, wobei diese vorzugsweise in Kunststoffgießmassen eingegossene Metallteile umfassen.

Diese und weitere Vorteile der Erfindung werden im folgenden anhand der Zeichnung und der Beispiele noch näher erläutert. Es zeigen im einzelnen:
- Fig. 1:: eine Vorrichtung zur Bestimmung der Viskosität der erfindungsgemäß einzusetzenden Gießmassen;
- Fig. 2a/b bis 4a/b:: verschiedene erfindungsgemäße Armaturenteile in Schnitt bzw. Draufsicht.

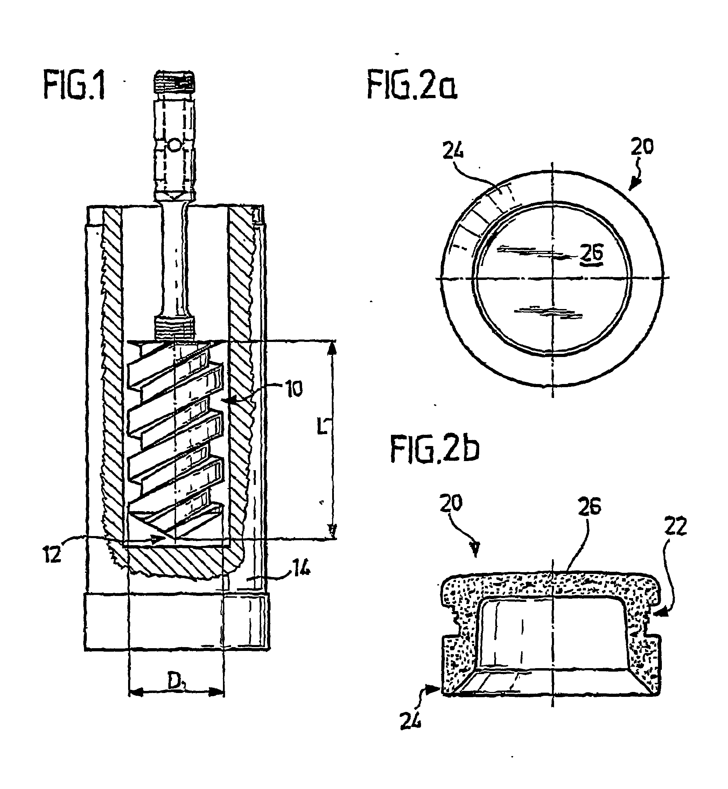

Bei der Auswahl der rheologisch wirksamen Additive wird die Viskosität der Gießmasse zunächst ohne Additiv in einer Vorrichtung gemäß der Figur 1 überprüft, danach das Additiv zugegeben und eine erneute Messung der Viskosität vorgenommen. Die Viskositätsmessung lehnt sich hierbei an die DIN 53019 an, wobei folgende Modifikationen vorgenommen worden sind:

Bei der Viskositätsmessung wird der in Figur 1 abgebildete Drehkörper 10 mit einer kegeligen Spitze 12 verwendet, dessen Länge L 51 mm und dessen Durchmesser D 23 mm beträgt. Bei dem Gewinde des Drehkörpers 10 handelt es sich um ein zweigängiges Trapezgewinde mit einer Nutbreite von 5,5 mm/3,5 mm bei einer Nuttiefe von 3 mm. Die Steigung p des Gewindes beträgt 24 mm. Die kegelige Spitze 12 des Drehkörpers weist einen Winkel von 120° auf. Es wird ein Meßbecher 14 verwendet, dessen zylindrischer Hohlraum einen Durchmesser von 26,9 mm aufweist. Zur Kalibrierung wurde eine Prüfflüssigkeit mit bekannter Viskosität von 5,100 Pa · s verwendet.

Im folgenden seien Beispielrezepturen für erfindungsgemäß zu verwendende Kunststoffgießmassen angegeben:

### Beispiel 1:

2,0 kg PMMA (Methylmethacrylatpräpolymer) mit einem Molekulargewichtsbereich Mw von 50 000 bis 250 000 wird in 8 kg Methylmethacrylatmonomer gelöst (Polymersirup) und mit einem üblichen Entformungshilfsmittel sowie einem üblichen Vernetzer versetzt. Als Entformungshilfsmittel kommen beispielsweise Zinkstearat und für den Vernetzer beispielsweise Trimethylolpropantrimethacrylat (TRIM) oder Ethylenglykoldimethacrylat in Frage. Danach werden 27 kg eines runden bzw. kantengerundeten Sandes im Korngrößenbereich von 200 bis 2 000 µm (beispielsweise erhältlich als Mischung aus den Typen 1/8 und 2/9 SIG silanisiert von der Firma Dorfner in Amberg, Deutschland) zugegeben, was zu einem Füllstoffanteil von 73 m% führt.

Nach dem Zusetzen von Peroxiden (beispielsweise Lauroylperoxid) sowie 0,3 m% eines rheologisch wirksamen Additivs in Form von BYK 410 der Firma Byk Chemie GmbH (46463 Wesel, Deutschland), gelöst in 0,9 m% MMA zugegeben, und die Gesamtmischung während 5 min. homogenisiert. In dieser Rezeptur wird damit ein rheologisch wirksames Additiv vom Typ der thixotropierenden modifizierten Polyharnstoffe verwendet. Vorstehende m%-Angaben sind jeweils auf die Gesamtrezeptur bezogen. Prinzipiell könnte dieses Additiv auch direkt in die Gießmasse eingearbeitet werden, jedoch läßt sich dieser realitv geringe Rezepturanteil in gelöster Form (vergrößertes Volumen) einfacher und schneller in der Gießmasse homogen verteilen.

Die Viskosität der Gießmasse sinkt bei Zugabe des in MMA gelösten rheologisch wirksamen Additivs von 6,0 Pa · s auf 5,6 Pa · s. Bei dem hier bevorzugt verwendeten Addittiv der Klasse der modifizierten Polyharnstoffe stellt man erstaunlicherweise fest, daß der durch die zusätzliche Zugabe an MMA, die ja die Viskosität der Gießmasse erniedrigt, keine Füllstoffseparation und auch keine Entmischung von Polymersirup und Füllstoff zur Folge hat, wie man das bei den in Vergleichsbeispielen verwendeten Additiven beobachtet.

Mit der homogenisierten und evakuierten Masse wird dann das entsprechende Formenwerkzeug befüllt (Befüllzeit ca. 60 sec.), nach Beendigung des Befüllvorganges wird die Gießmasse anstehen gelassen, um Volumenverluste während der Aushärtung ausgleichen zu können und das Formenwerkzeug auf ca. 95 °C aufgeheizt. Nach Ablauf von ca. 12 min. wird die anstehende Gießmasse abgekoppelt und das Formenwerkzeug für weitere 18 min. auf der vorgenannten Temperatur gehalten. Anschließend wird abgekühlt und das Formteil entformt.

Man erhält eine gleichmäßige Oberfläche, die keine Füllstoffseparation aufweist. Die Haptik der so hergestellten Armaturenteile (vgl. Fig. 2b, 3b und 4b) entspricht vollständig der der Oberfläche der aus derselben Gießmasse (ohne rheologisches Additiv) hergestellten Küchenspülen. Auch lassen sich keine z.T. bei den Vergleichsbeispielen beobachtete Anhäufungen von Polymermaterialien finden, die sich in der Form von an der Oberfläche sichtbaren glasigen Stellen äußern und die sich dort beim Entmischen von Polymersirup und Füllstoff bilden.

### Beispiel 2:

Die Rezeptur von Beispiel 1 wurde abgewandelt insoweit, als statt eines Anteils von 0,3 m% BYK 410 ein Anteil von 0,5 m% in 1,5 m% MMA gelöst zugegeben wurde.

Die Viskosität der Gießmasse erniedrigte sich von 6,0 Pa · s auf 5,7 Pa · s.

Die Qualitätsprüfung der erhaltenen Armaturenformteile erbrachte vergleichbare Qualitätsstandards wie in Beispiel 1.

Die Formenbefüllzeit betrug wie in Beispiel 1 60 sec.

### Beipspiel 3:

Die Rezeptur von Beispiel 1 wurde abgewandelt insoweit, als statt eines Anteils von 0,3 m% BYK 410 ein Anteil von lediglich 0,2 m% in 0,6 m% MMA gelöst verwendet wurde.

Die Viskosität der Gießmasse erniedrigte sich von 6,0 Pa · s auf 5,3 Pa · s.

Auch bei diesem Beispiel wurde eine der in Beispiel 1 erzielten vergleichbare Oberflächenqualität erreicht.

Die Formenbefüllzeit lag bei diesem Beispiel ebenfalls bei 60 sec.

### Vergleichsbeispiel 1:

2,0 kg PMMA mit einem Molekulargewichtsbereich Mw von 50 000 bis 250 000 wird in 8,0 kg MMA gelöst und mit Entformungshilfsmitteln und Vernetzer (vgl. Beispiel 1) versetzt. Dann werden 27 kg eines runden oder kantengerundeten Sandes im Korngrößenbereich von 200 bis 2 000 µm (eine Mischung aus den Typen 1/8 und 2/9 SIG silanisiert der Firma Dorfner in Amberg, Deutschland) zugegeben, was zu einem Füllstoffanteil von 73 m% führt.

Nach dem Zusatz von Peroxiden (vgl. Beispiel 1) werden 0,3 m% eines rheologisch wirksamen Additivs in Form von Tixogel VZ der Firma Südchemie (81709 München, Deutschland) zugegeben und die Gesamtmischung während 5 min. homogenisiert. Bei dieser Rezeptur kommt also ein rheologisch wirksames Additiv vom Typ der organisch modifizierten Smektite zum Einsatz. Die Viskosität der Gießmasse erhöht sich von 6,0 Pa · s auf 7,2 Pa · s.

Die homogenisierte und evakuierte Gießmasse wird in das Formenwerkzeug gefüllt, nach Beendigung des Befüllvorganges wird die Gießmasse anstehen gelassen und das Formenwerkzeug auf ca. 95 °C aufgeheizt. Nach Ablauf von 12 min. wird die anstehende Gießmasse abgekoppelt und das Formenwerkzeug für weitere 18 min. auf der vorgenannten Temperatur gehalten.

Aufgrund der höheren Viskosität der hier verwendeten Gießmassen benötigt man gegenüber der Gießmasse von Beispiel 1 die sechsfache Zeit, um dasselbe Formenwerkzeug zu befüllen.

Anschließend wird abgekühlt und das Formteil (vgl. Fig. 2b, 3b und 4b) entformt. Man erhält eine Oberfläche, die zwar keine Füllstoffseparation aufweist, jedoch an der Oberfläche Glanzstellen aufweist.

### Vergleichsbeispiel 2:

2,0 kg PMMA mit einem Molekulargewichtsbereich Mw von 50 000 bis 250 000 wird in 8,0 kg MMA gelöst und mit Entformungshilfsmitteln und Vernetzer (vgl. Beispiel 1) versetzt. Dann werden 27 kg eines runden oder kantengerundeten Sandes im Korngrößenbereich von 200 bis 2 000 µm (eine Mischung aus den Typen 1/8 und 2/9 SIG silanisiert der Firma Dorfner in Amberg, Deutschland) zugegeben, was zu einem Füllstoffanteil von 73 m% führt.

Nach dem Zusatz von Peroxiden (vgl. Beispiel 1) werden 0,7 m% eines rheologisch wirksamen Additivs in Form von Cab-O-Sil M5 der Firma Cabot GmbH (79618 Rheinfelden, Deutschland) zugegeben und die Gesamtmischung während 5 min. homogenisiert. Bei dieser Rezeptur kommt also ein rheologisch wirksames Additiv vom Typ der nicht silanisierten Kieselgele zum Einsatz. Die Viskosität der Gießmasse erhöht sich von 6,0 Pa · s auf mehr als 12,5 Pa · s.

Die homogenisierte und evakuierte Gießmasse wird in das Formenwerkzeug gefüllt, nach Beendigung des Befüllvorganges wird die Gießmasse anstehen gelassen und das Formenwerkzeug auf ca. 95 °C aufgeheizt. Nach Ablauf von 12 min. wird die anstehende Gießmasse abgekoppelt und das Formenwerkzeug für weitere 18 min. auf der vorgenannten Temperatur gehalten. Die Befüllzeit für das Formenwerkzeug ist hier gegenüber Beispiel 1 um den Faktor 15 verlängert.

Anschließend wird abgekühlt und das Formteil (vgl. Fig. 2b, 3b und 4b) entformt. Man erhält eine Oberfläche, die zwar keine Füllstoffseparation aufweist, jedoch treten Entmischungen von Polymersirup und Füllstoff auf. Dies resultiert in an der Oberfläche sichtbaren Polymeranhäufungen. Die Oberfläche weist darüber hinaus einen leichten Grauschleier auf. Nicht nur das Aussehen, sondern auch die Haptik ist unakzeptabel, da die an der Oberfläche zu erkennenden Glanzstellen nicht nur das Aussehen beeinträchtigen, sondern auch die im Vorbild gefundene Oberflächenrauhigkeit vermissen lassen.

### Vergleichsbeispiel 3:

2,0 kg PMMA mit einem Molekulargewichtsbereich Mw von 50 000 bis 250 000 wird in 8,0 kg MMA gelöst und mit Entformungshilfsmitteln und Vernetzer (vgl. Beispiel 1) versetzt. Dann werden 27 kg eines runden oder kantengerundeten Sandes im Korngrößenbereich von 200 bis 2 000 µm (eine Mischung aus den Typen 1/8 und 2/9 SIG silanisiert der Firma Darfner in Amberg, Deutschland) zugegeben, was zu einem Füllstoffanteil von 73 m% führt.

Nach dem Zusatz von Peroxiden (vgl. Beispiel 1) werden 1,0 m% eines rheologisch wirksamen Additivs in Form von Cab-O-Sil TS 720 der Firma Cabot GmbH (79618 Rheinfelden, Deutschland) zugegeben und die Gesamtmischung während 5 min. homogenisiert. Bei dieser Rezeptur kommt also ein rheologisch wirksames Additiv vom Typ der silanisierten Kieselgele zum Einsatz. Die Viskosität der Gießmasse erhöht sich von 6,0 Pa · s auf 7,0 Pa · s.

Die homogenisierte und evakuierte-Gießmasse wird in das Formenwerkzeug gefüllt, nach Beendigung des Befüllvorganges wird die Gießmasse anstehen gelassen und das Formenwerkzeug auf ca. 95 °C aufgeheizt. Nach Ablauf von 12 min. wird die anstehende Gießmasse abgekoppelt und das Formenwerkzeug für weitere 18 min. auf der vorgenannten Temperatur gehalten. Die Befüllzeit für das Formenwerkzeug ist hier gegenüber Beispiel 1 um den Faktor 5 verlängert.

Anschließend wird abgekühlt und das Formteil (vgl. Fig. 2b, 3b und 4b) entformt. Man erhält eine Oberfläche, die aufgrund der Entmischung von Sirup und Füllstoff Polymeranhäufungen aufweist. Nicht nur das Aussehen, sondern auch die Haptik ist unakzeptabel, da die an der Oberfläche zu erkennenden Glanzstellen die erwünschte Oberflächenrauhigkeit vermissen lassen.

### Zu den Figuren 2 bis 4 im einzelnen:

Die Figuren 2a und 2b zeigen in Draufsicht (von unten) bzw. im Schnitt eine Kappe 20 einer Wasserzapfarmatur, welche eine mit einem ringförmigen Rücksprung 22 versehene zylindrische Wandung 24 aufweist. Die Kappe 20 ist an einem Ende der Wandung 24 von einem Deckel 26 verschlossen, der leicht nach außen gewölbt ist.

Mit den oben genannten Beispielrezepturen können auch die filigranen Einzelheiten des ringförmigen Rücksprungs 22 in ausgezeichneter Qualität abgebildet werden. Darüber hinaus erlauben die Beispielrezepturen die Herstellung er Armaturenteile, ohne daß eine Nachbearbeitung notwendig wäre.

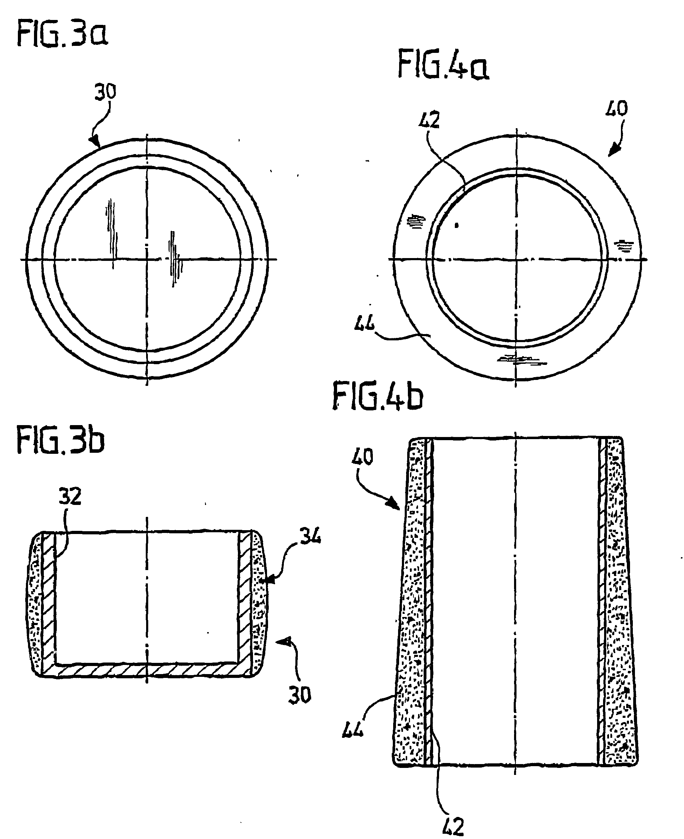

Die Figuren 3a und 3b zeigen in der Draufsicht bzw. im Schnitt eine Kappe 30, die einen einseitig verschlossenen metallischen Hohlzylinder 32 und einen relativ dünnwandigen ringförmigen, die Zylinderwand bedeckenden Umguß 34, der direkt auf den metallischen Hohlzylinder 32 aus einer Gießmasse der Beispiele aufgegossen wird. Das Aushärten erfolgt ohne jede Spannungsrisse bei gleichmäßiger Füllstoffverteilung.

Die Figuren 4a und 4b zeigen eine Hülse 40 in Draufsicht bzw. Schnittdarstellung, die ein metallisches zylindrisches Rohr 42 und eine um das Rohr 42 umgossene konische Manschette 44 umfaßt.

Dieses Beispiel eines Armaturenteils zeigt, daß die erfindungsgemäßen Armaturenteile sehr unterschiedliche Dicken des aus einer Runststoffgießmasse gebildeten Materials aufweisen dürfen, ohne daß Probleme wie z. B. Spannungsrisse auftreten.

Wie auch bei dem Armaturenteil der Figuren 3a und 3b werden hier Teile erhalten, die ohne jede Nachbearbeitung verwendbar sind.

Für alle Armaturenteile der Figuren 2a und 2b, Figuren 3a und 3b sowie Figuren 4a und 4b gilt, daß die erhaltene Kunststoffoberfläche jeweils ein gleichmäßiges Granitdekor aufwies und frei von Löchern war, sofern mit den Gießmassen der Beispiele 1 bis 3 gearbeitet wurde.

Die Gießmassen der Vergleichsbeispiele lieferten unbrauchbare Teile, da die Ausbildung von Löchern an der Oberfläche dem Teil ein unakzeptables Aussehen und eine unakzeptable Haptik verliehen. Darüber hinaus weisen die so erhaltenen Teile Glanzstellen an den Oberflächen auf, die beim Gießen und Aushärten der Gießmasse in dem Formwerkzeug nicht unten liegen. Darüber hinaus kommt es zu an der Oberfläche als glasige Stellen erkennbare Polymeranhäufungen, die aus einer Entmischung von Polymersirup und Füllstoff resultieren, begünstigt auch durch die notwendigen langen Befüllzeiten. Dies beeinträchtigt das Aussehen der Armaturenteile zusätzlich.

Die in den vorstehenden Beispielen und Vergleichsbeispielen angegebenen Zykluszeiten lassen sich in vielen Fällen deutlich verkürzen, ohne daß besondere Maßnahmen zu ergreifen wären. Für optimierte Temperaturprofile ergeben sich Gesamtzykluszeiten von ca. 20 bis 25 min.

## Patentansprüche

1. Armaturenteile mit einer Granitdekoroberfläche, hergestellt unter Verwendung von aushärtbaren Kunststoffgießmassen, welche einen mineralischen, partikelförmigen Füllstoff mit Partikelgrößen im Bereich von 0,1 bis 2 mm in einer Menge von 50 bis 85 m% sowie ein rheologisch wirksames Additiv umfassen, welches aus modifizierten Polyharnstoffen ausgewählt ist, so daß ein Absinken der Füllstoffe während des Gieß- und Aushärtevorganges im wesentlichen vermieden wird, die Viskosität der das Additiv enthaltenden Gießmassen jedoch 6,3 Pa · s oder weniger beträgt.

2. Armaturenteile nach Anspruch 1, **dadurch gekennzeichnet, daß** die Kunststoffgießmassen einen Matrixbestandteil aufweisen, welcher im wesentlichen ein Polyester, ein Polyacrylat, ein Polymethylacrylat oder ein Epoxydharz ist.

3. Armaturenteile nach Anspruch 1 oder 2, **dadurch gekennzeichnet, daß** der Füllstoff Füllstoffpartikel im Bereich von 0,1 bis 1 mm umfaßt und daß das Armaturenteil einen Füllstoffgrad im Bereich von 70 bis 85 m% aufweist.

4. Armaturenteile nach einem der Ansprüche 1 bis 3, **dadurch gekennzeichnet, daß** die Granitdekoroberfläche kleine Vertiefungen aufweist.

5. Armaturenteile nach einem der Ansprüche 1 bis 4, **dadurch gekennzeichnet, daß** der modifizierte Polyharnstoff in einer Menge von 0,15 m% oder mehr in der Gießmasse vorhanden ist.

6. Armaturenteile nach einem der voranstehenden Ansprüche, **dadurch gekennzeichnet, daß** das rheologisch wirksame Additiv in einer geringfügigen Menge eines Lösemittels, vorzugsweise in Form eines flüssigen, mit der aushärtbaren Gießmasse verträglichen Monomeren, gelöst beigemischt ist.

7. Armaturenteile nach Anspruch 6, **dadurch gekennzeichnet, daß** die Menge des Lösemittels weniger als 2 m%, vorzugsweise weniger als 1 m% der Gesamtgießmasse beträgt.

8. Armaturenteile nach einem der Ansprüche 1 bis 7 in Form einer Wasserzapfarmatur.

9. Armaturenteile nach Anspruch 8, **dadurch gekennzeichnet, daß** die Armaturenteile in die Kunststoffgießmassen eingegossene Metallteile umfassen.

## Claims

1. Fitting parts with a granite-décor surface, produced using hardenable plastics-material casting compounds which comprise a mineral filler in a particulate form with particle sizes in the range of from 0.1 to 2 mm in a quantity of from 50 to 85% by mass and a rheologically active additive which is selected from modified polyureas, so as substantially to prevent the fillers from sinking during the casting and hardening procedure, but the viscosity of the casting compounds containing the additive amounts to 6.3 Pa·s or less.

2. Fitting parts according to Claim 1, **characterized in that** the plastics-material casting compounds contain a matrix component which is substantially a polyester, a polyacrylate, a polymethylacrylate or an epoxy resin.

3. Fitting parts according to Claim 1 or 2, **characterized in that** the filler comprises filler particles in the range of from 0.1 to 1 mm, and the fitting part has a degree of filler in the range of from 70 to 85% by mass.

4. Fitting parts according to one of Claims 1 to 3, **characterized in that** the granite-décor surface has small depressions.

5. Fitting parts according to one of Claims 1 to 4, **characterized in that** the modified poly-urea is present in a quantity of 0.15% by mass or more in the casting compound.

6. Fitting parts according to one of the preceding Claims, **characterized in that** the rheologically active additive is admixed dissolved in a small quantity of a solvent, preferably in the form of a liquid monomer which is compatible with the hardenable casting compound.

7. Fitting parts according to Claim 6, **characterized in that** the quantity of the solvent amounts to less than 2% by mass, and preferably less than 1% by mass, of the total casting compound.

8. Fitting parts according to one of Claims 1 to 7 in the form of a tap fitting.

9. Fitting parts according to Claim 8, **characterized in that** the fitting parts comprise metallic parts cast in the plastics-material casting compounds.

## Revendications

1. Pièces d'accessoires avec une surface décorative imitation granit, fabriquée à partir d'une application de masses de remplissage plastiques durcissables, lesquelles comprennent une charge minérale, particulaire avec une taille de particules de l'ordre de 0,1 à 2 mm dans une quantité de 50 à 85 % massiques ainsi qu'un additif efficace du point de vue rhéologique, lequel est choisi à partir de polyurées modifiées, de sorte que l'on évite sensiblement une diminution de la charge au cours du processus de remplissage et de durcissement, la viscosité des masses de remplissage contenant l'additif s'élevant toutefois à 6,3 Pa · s ou moins.

2. Pièces d'accessoires selon la revendication 1, **caractérisées en ce que** les masses de remplissage plastiques présentent un élément de matrice, lequel est essentiellement un polyester, un polyacrylate, un polyméthylacrylate ou une résine époxy.

3. Pièces d'accessoires selon la revendication 1 ou 2, **caractérisées en ce que** la charge comprend des particules de charge de l'ordre de 0,1 à 1 mm et **en ce que** la pièce d'accessoires présente un degré de charge de l'ordre de 70 à 85 % massiques.

4. Pièces d'accessoires selon l'une des revendications 1 à 3, **caractérisées en ce que** la surface décorative imitation granit présente de petits évidements.

5. Pièces d'accessoires selon l'une des revendications 1 à 4, **caractérisées en ce que** la polyurée modifiée est présente dans la masse de remplissage dans une proportion allant de 0,15 % massique ou plus.

6. Pièces d'accessoires selon l'une des revendications précédentes, **caractérisées en ce que** l'additif efficace du point de vue rhéologique est mélangé en solution dans une petite quantité d'un solvant, de préférence sous forme d'un monomère liquide compatible avec la masse de remplissage durcissable.

7. Pièces d'accessoires selon la revendication 6, **caractérisées en ce que** la quantité de solvant s'élève à moins de 2 % massiques, de préférence à moins de 1 % massique de la masse de remplissage totale.

8. Pièces d'accessoires selon l'une des revendications 1 à 7, sous la forme d'un robinet de distribution d'eau.

9. Pièces d'accessoires selon la revendication 8, **caractérisées en ce que** les pièces d'accessoires comprennent des pièces métalliques coulées dans les masses de remplissage plastiques.
